(19) Europäisches Patentamt
European Patent Office
Office européen des brevets

(11) Veröffentlichungsnummer: **0 003 516**
**B1**

(12) # EUROPÄISCHE PATENTSCHRIFT

(45) Veröffentlichungstag der Patentschrift: **01.04.81**

(51) Int. Cl.³: **C 08 L 33/00, C 08 K 3/10, C 08 K 5/25, C 14 C 11/00**

(21) Anmeldenummer: **79100168.8**

(22) Anmeldetag: **19.01.79**

(54) **Wässrige Dispersionen von Carbonylgruppen aufweisenden Copolymerisaten, die Hydrazinderivate und Schwermetallionen enthalten.**

(30) Priorität: **26.01.78 DE 2803258**

(43) Veröffentlichungstag der Anmeldung:
**22.08.79 Patentblatt 79/17**

(45) Bekanntmachung des Hinweises auf die Patenterteilung:
**01.04.81 Patentblatt 81/13**

(84) Benannte Vertragsstaaten:
**BE CH DE FR GB IT NL SE**

(56) Entgegenhaltungen:
**FR - A - 1 411 539**
**GB - A - 654 856**
**GB - A - 726 463**
**US - A - 2 876 211**
**US - A - 4 016 127**

(73) Patentinhaber: **BASF Aktiengesellschaft**
**Carl-Bosch-Strasse 38**
**D-6700 Ludwigshafen (DE)**

(72) Erfinder: **Ley, Gregor, Dr.**
**In den Trankstuecken**
**D-6719 Wattenheim (DE)**
Erfinder: **Penzel, Erich, Dr.**
**Carl-Bosch-Strasse 86**
**D-6700 Ludwigshafen (DE)**
Erfinder: **Rebafka, Walter, Dr.**
**Schuetzenstrasse 4**
**D-6901 Eppelheim (DE)**
Erfinder: **Bott, Kaspar, Dr.**
**Rieslingweg 4**
**D-6706 Wachenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 516 B1

Courier Press, Leamington Spa, England.

# Wäßrige Dispersionen von Carbonylgruppen aufweisenden Copolymerisaten, die Hydrazinderivate und Schwermetallionen enthalten

Wäßrige Dispersionen von Carbonylgruppen aufweisenden Copolymerisaten sind schon lange bekannt. Sie können beispielsweise Acrylsäureester und/oder Methacrylsäureester, Vinylester wie Vinylacetat und/oder Vinylpropionat, Vinylhalogenide wie Vinylchlorid und/oder Vinylidenchlorid, vinylaromatische Verbindungen besonders Styrol und/oder gegebenenfalls 1,3-Diene, wie besonders Butadien als Hauptmonomere einpolymerisiert enthalten. Die Ketogruppen der bekannten Carbonylgruppen aufweisenden Copolymerisate leiten sich z.B. von einpolymerisierten Alkyl-vinylketonen wie besonders Vinyl-methylketon, Vinyl-äthylketon und/oder Vinyl-n-butylketon, von einpolymerisierten Ketocarbonsäurevinylestern aliphatischer Mono- und/oder Dicarbonsäuren mit meist 4 bis 8 C-Atomen, wie Lävulinsäure, $\gamma,\gamma$-Dimethyl-$\delta$-ketocapronsäure und Acetessigsäure, N-Vinylamiden aliphatischer Ketocarbonsäuren mit 4 bis 8 C-Atomen und/oder von $\alpha,\beta$-monoolefinisch ungesättigten Aldehyden mit 3 bis 4 C-Atomen wie Acrolein, Methacrolein, Crotonaldehyd oder Zimtaldehyd ab. Derartige Copolymerisat-Dispersionen können auch Zusätze an organischen Hydrazinderivaten wie besonders polyfunktionellen Carbonsäurehydraziden, z.B. Dihydrazide aromatischer oder aliphatischer Carbonsäuren wie Phthalsäuredihydrazid, Isophthalsäuredihydrazid, Terephthalsäuredihydrazid, Oxalsäuredihydrazid, Sebacinsäuredihydrazid oder Polyhydrazide, die sich von Polycarbonsäuren ableiten, enthalten (vgl. DE—OS 1 495 706). Solche Gemische enthalten im allgemeinen 30 bis 65, insbesondere 45 bis 50 Gew.% an Copolymerisaten der genannten Art und können für die Anstrichfarben- und Klebstoffindustrie sowie zum Behandeln von Leder, Textilien und Papier verwendet werden. Der Gehalt an Hydraziden wirkt dabei als Vernetzungsmittel und die Vernetzung findet insbesondere nach der Filmbildung aus den Dispersionen bei Raumtemperatur rasch statt. Ein Nachteil dieser bekannten Gemische besteht jedoch vor allem darin, daß bei der Lagerung aus den Hydrazinderivaten durch Hydrolyse freies Hydrazin gebildet wird, das wegen seiner Giftigkeit stört.

Es wurde nun gefunden, daß wäßrige Dispersionen von Carbonylgruppen aufweisenden Copolymerisaten, die je Mol Carbonylgruppe 0,02 bis 1 Mol organische Hydrazinderivate mit mindestens 2 Hydrazinresten enthalten, vorteilhafte Eigenschaften aufweisen, wenn sie einen Gehalt von 0,0002 bis 0,2 Mol, bezogen auf 1 Mol der Hydrazinderivate, an Ionen des Kupfers, Zinks, Eisens, Chroms, Mangans, Bleis, Vanadiums Kobalts und/oder Nickels, die als wasserlösliche Salte zugesetetwerden, enthalten. Durch den Gehalt an diesen Ionen wird insbesondere erreicht, daß sich in den die Hydrazinderivate enthaltenden wäßrigen Dispersionen der Carbonylgruppen aufweisenden Copolymerisate kein störender Gehalt an freiem Hydrazin bei der Lagerung bildet. Außerdem wird durch diesen Gehalt die Vernetzungsreaktion in den aus den Gemischen gebildeten Filmen nicht nachteilig beeinflußt (beschleunigt), so daß ein Tempern von Substraten, die mit den Gemischen beschichtet, überzogen oder imprägniert sind, im allgemeinen bei niedrigen Temperaturen vorgenommen werden kann. Es ist überraschend, daß Überzüge, Beschichtungen und Imprägnierungen, die unter Verwendung der neuen Gemische hergestellt sind, keine verminderte Alterungsbeständigkeit und keine verminderte Lichtbeständigkeit aufweisen.

Die für die Herstellung der neuen Gemische eingesetzten wäßrigen Dispersionen der Carbonylgruppen aufweisenden Copolymerisate olefinisch ungesättigter Monomeren können in üblicher Weise durch Emulsions-Copolymerisation von Carbonylgruppen aufweisenden mono-olefinisch ungesättigten Monomeren mit anderen olefinisch ungesättigten Monomeren hergestellt werden. Ihr Anteil, bezogen auf die gesamten Monomeren, beträgt meist 0,1 bis 20, vorzugsweise 2 bis 15 Gew.%, bezogen auf die gesamten Monomeren. Von besonderem Interesse sind Acrolein, Diacetonacrylamid, Formylstyrol, Vinyl-alkylketone mit 4 bis 7 C-Atomen, wie besonders Vinylmethylketon und/oder (Meth)acryloxyalkylpropanale der allgemeinen Formel (I)

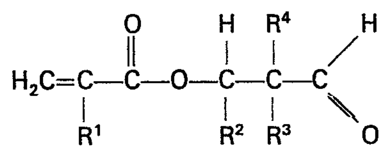
,

in der $R^1$ für —H oder —$CH_3$, $R^2$ für —H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)-acryloxy-alkylpropanale können nach dem Verfahren der DE—OS 27 22 097 durch Veresterung von $\beta$-Hydroxyalkylpropanalen der allgemeinen Formel (II)

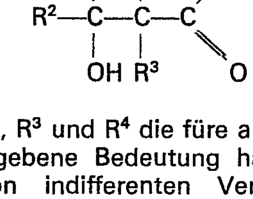
,

in der $R^2$, $R^3$ und $R^4$ die füre allgemeine Formel (I) angegebene Bedeutung haben, in Gegenwart von indifferenten Verdünnungsmitteln sowie geringen Mengen Sulfonsäuren und

Mineralsäuren bei Temperaturen von 40 bis 120, insbesondere von 60 bis 90°C hergestellt sein. Als Ketogruppen tragende Monomere kommen ferner Acrylamidopivalinaldehyd, Methacrylamidopivalinaldehyd, 3-Acrylamidomethyl-anisaldehyd, Diacetonacrylat, Acetonylacrylat, Diacetonmethacrylat, 2-Hydroxypropylacrylatacetylacetat und Butandiolacrylatacetylacetat in Frage. Als olefinisch ungesättigte Comonomere für die Herstellung der Carbonylgruppen aufweisenden Copolymerisat-Dispersionen, die meist in Mengen von 80 bis 99,9, vorzugsweise von 85 bis 98 Gew.% eingesetzt sind, kommen vorzugsweise die Acryl- und Methacrylsäureester von 1 bis 8, insbesondere von 1 bis 4 C-Atome enthaltenden Alkanolen, wie Methylalkohol, Äthylalkohol, Isopropylalkohol, Isobutylalkohol, n-Butylalkohol und 2-Äthylhexylalkohol und/oder vinylaromatische Monomere, wie besonders Styrol, und/oder 1,3-Diene, wie besonders 1,3-Butadien, und/oder Vinylester meist 1 bis 12 C-Atome enthaltender Alkanmono-carbonsäuren, wie besonders Vinylacetat, Vinylpropionat, Vinyl-n-butyrat und Vinyllaurat sowie ferner Vinylhalogenide, wie besonders Vinylchlorid und Vinylidenchlorid, Alkylester von monoolefinisch ungesättigten Dicarbonsäuren, wie Di-n-butyl-maleinsäureester und -fumarsäureester in Betracht. Die Carbonylgruppen aufweisenden Copolymerisate können zusätzlich in geringen Mengen, die meist zwischen 0,5 und 10, insbesondere zwischen 0,5 und 5 Gew.%, bezogen auf die gesamten Monomeren, liegen, $\alpha,\beta$-monoolefinisch ungesättigte Mono- und/oder Dicarbonsäuren, die meist 3 bis 5 C-Atome enthalten und/oder deren gegebenenfalls an den Stickstoffatomen substituierte Amide, wie besonders Acrylsäure, Methacrylsäure, Fumarsäure, Itaconsäure, Acrylamid, Methacrylamid, N-Methylacrylamid, N-Methylolacrylamid, N-n-Butoxymethylmethacrylamid, Maleinimid, Maleinsäurediamid sowie ferner monoolefinisch ungesättigte Sulfonsäuren, wie insbesondere Vinylsulfonsäure, Methylacrylamidopropansulfonsäure einpolymerisiert enthalten. Als Comonomeres in Mengen von meist 5 bis 40, insbesondere von 10 bis 30 Gew.%, bezogen auf die gesamten Monomeren, kommt außerdem auch Acrylnitril und/oder Methacrylnitril in Frage. Die wäßrigen Dispersionen der Carbonylgruppen enthaltenden Copolymerisate können in üblicher Weise hergestellt sein und die üblichen Dispergierhilfsmittel, wie besonders anionische und/oder nichtionische Emulgatoren in den üblichen Mengen von meist 0,2 bis 3 Gew.%, bezogen auf die Menge des Copolymerisats, enthalten. Derartigen Emulgatoren sind z.B. Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäuren, oxäthylierte $C_{12}$- bis $C_{24}$-Fettalkohole und oxäthylierte Alkylphenole sowie ferner oxäthylierte Fettsäuren und/oder oxäthylierte Fettamide, ferner Natriumsalze von Fettsäuren, wie Natriumstearat und Natriumoleat. Anstelle der anionischen und gegebenenfalls zusätzlich zu nicht-ionischen Emulgatoren der genannten Art können die wäßrigen Dispersionen der Carbonylgruppen enthaltenden Copolymerisate in manchen Fällen auch üblich kationische Emulgatoren wie $C_{12-18}$ $(C_{1-4})_3$-ammoniumchloride enthalten. Zu der Herstellung von wäßrigen Dispersionen von Copolymerisaten von (Meth)acryloxy-alkylpropanalen der oben angegebenen allgemeinen Formel (I) mit den Hauptmonomeren der oben angegebenen Art bei der in an sich üblicher Weise in wäßriger Emulsion unter Verwendung von Emulgatoren der angegebenen Art polymerisiert wird, arbeitet man meist bei Temperaturen von 40 bis 90°C unter Verwendung von meist 0,05 bis 2 Gew.%, bezogen auf die gesamten Monomeren, an üblichen Radikalbildenden Polymerisationsinitiatoren, wie besonders Wasserstoffperoxid und/oder Persulfaten, wie Ammoniumpersulfat, Kaliumpersulfat und Natriumpersulfat. Auch Gemische von Wasserstoffperoxid und/oder Persulfaten der genannten Art mit Reduktionsmitteln, z.B. Natriumformaldehydsulfoxylat, d.h. übliche Redox-Katalysatoren, kommen hierfür in Frage.

Die Menge der organischen Hydrazinderivate beträgt je Mol der in den Copolymerisaten enthaltenen Carbonylgruppen 0,02 bis 1, vorzugsweise 0,05 bis 05 Mol. Die organischen Hydrazinderivate enthalten mindestens 2 Hydrazinreste und sie können sich mit Vorteil von gesättigten aliphatischen Dicarbonsäuren ableiten. Von besonderem Interesse sind 2 bis 10 C-Atome enthaltende aliphatische Carbonsäuredihydrazide. Geeignete Dihydrazide dieser Art sind insbesondere Oxalsäuredihydrazid, Malonsäuredihydrazid, Bernsteinsäuredihydrazid, Glutarsäuredihydrazid, Adipinsäuredihydrazid und/oder Sebacinsäuredihydrazid. Sehr gut geeignet sind auch Polyhydrazide der Kohlensäure, z.B. Kohlensäuredihydrazid und Verbindungen der allgemeinen Formel III

$$H_2N\text{—}NHC\text{—}(NH\text{—}NH\text{—}\underset{\underset{O}{\|}}{C}\text{—})_xNH\text{—}NH_2\ ,$$

in der x für 1 bis 5, vorzugsweise für 1 bis 3 steht, sowie Bis-semicarbazide, insbesondere aliphatische, cycloaliphatische Bis-semicarbazide der allgemeinen Formel IV

$$H_2N\text{—}NH\text{—}\underset{\underset{O}{\|}}{C}\text{—}NH\text{—}R\text{—}RN\underset{\underset{O}{\|}}{C}\text{—}NH\text{—}NH_2$$

in der —R— für geradkettige oder verzweigte aliphatische Reste mit 2 bis 7 C-Atomen oder für einen 6 bis 8 C-Atome enthaltenden carbocyclischen Rest, z.B. den o-, m- oder p-Phenylen- oder einen Toluylenrest oder einen Cyclohexyliden- oder Methylcyclohexylidenrest steht. Geeignet sind ferner Polyhydrazide aromatischer Polycarbonsäuren, wie die Dihydrazide der Phthalsäure, Terephthalsäure und Isophthalsäure sowie die Dihydrazide, das Trihydrazid und das Tetrahydrazid der Pyromellithsäure. Geeignet sind beispielsweise auch Polyhydrazide von Polyacrylsäuren, die je Molekül mindestens 2 Hydrazidgruppen, meist 20 bis 100 Hydrazidgruppen, aufweisen, ferner Trihydrazide, wie Nitrilotriessigsäuretrihydrazid und Tetrahydrazide, wie Äthylendiamintetraessigsäuretetrahydrid. Als in Frage kommende Hydrazide seien noch Di- und Trihydrazin-triazin, Thiocarbohydrazid und N,N'-Diaminoguanidin sowie Hydrazinpyridinderivate von der Art des 2-Hydrazinopyridin - 5 - carbonsäurehydrazids, des 3-Chlor-2-hydrazinpyridin-5-carbonsäurehydrazids, des 6-Chlor-2-hydrazinopyridin-4-carbonsäure-hydrazids und der 2,5-Dihydrazinopyridin-4-carbonsäure und Bis-thiosemicarbazide sowie Bishydrazine von Alkylenbisacrylamiden, Dihydrazinalkane, und Dihydrazine aromatischer Kohlenwasserstoffe wie 1,4-Dihydrazinobenzol, 1,3-Dihydrazinobenzol, 2,3-Dihydrazinnaphthalin sowie Dihydrazide von monoolefinisch ungesättigten Dicarbonsäuren wie Maleinsäuredihydrazid, Fumarsäuredihydrazid und Itaconsäuredihydrazid genannt.

In den Gemischen aus den wäßrigen Dispersionen der Carbonylgruppen aufweisenden Copolymerisate und der organischen Hydrazinderivate mit mindestens 2 Hydrazinresten sind 0,0002 bis 0,02 Mol, bezogen auf 1 Mol der Hydrazinderivate, der Ionen des Kupfers, Zinks, Eisens, Chroms, Mangans, Bleis, Vanadiums, Kobalts und/oder Nickels enthalten, die in Form von wasserlöslichen Salzen, insbesondere Chloriden, Sulfaten und Acetaten, zugesetztwerden. Wasserlösliche Salze des Kupfers, Eisens, Mangans, Vanadiums und/oder Kobalts sind von besonderem Interesse. Im einzelnen seien genannt Kupfer-II-chlorid, Kupfer-II-sulfat, Zinksulfat, Eisen-IIIchlorid, Kobalt-II-chlorid, Mangan-II-chlorid, Blei-II-acetat, Nickel-II-chlorid, Chrom-nitrat, Vanadyl-acetat und Chrom-III-sulfat.

Bei der Herstellung der wäßrigen Dispersionen von Carbonylgruppen aufweisenden Copolymerisaten, die organische Hydrazinderivate und Schwermetallionen bzw. -salze enthalten, setzt man die Schwermetallsalze vorzugsweise in Form vorher zubereiteter wäßriger Lösungen im allgemeinen nach der Polymerisation und meist zusammen mit oder nach den Hydrazinderivaten zu.

Aus den neuen Dispersionen könnenFilme hergestellt werden, die bei Raumtemperatur bereits so stark vernetzt sind, daß sie durch Lösungsmittel, wie Dimethylformamid praktisch nicht mehr gelöst, sondern nur schwach angequollen werden. Dies gilt auch für Imprägnierungen, Überzüge und Beschichtungen, die gegebenenfalls mit üblichen Pigmenten pigmentiert sind.

Die neuen Dispersionen können beispielsweise als Klebstoffrohstoffe, Zusatzstoffe für hydraulische Bindemittel, Bindemittel für Papierstreichmassen und Faservliese sowie zum Überziehen, Beschichten und/oder Imprägnieren beispielsweise flächiger Gebilde wie Gewebe, Gewirke oder Leder eingesetzt werden.

Die in den folgenden Beispielen angegebenen Teile und Prozente beziehen sich auf das Gewicht.

### Beispiel 1

In einem mit Rührwerk, Thermometer und Zulaufgefäß ausgestatteten Reaktionsgefäß erhitzt man ein Gemisch aus 7,3 Teilen einer 35%igen wäßrigen Lösung des Natriumsalzes eines sulfatierten Umsetzungsproduktes von Isooctylphenyl mit 25 Mol Äthylenoxid und eine Lösung von 2,5 Teilen Kaliumpersulfat in 220 Teilen Wasser. Zu dieser Lösung läßt man innerhalb von 1 1/2 Stunden eine Emulsion von 375 Teilen Methylacrylat, 90 Teilen n-Butylacrylat, 10 Teilen Acrylsäure und 25 Teilen Acrolein in einem Gemisch aus 21,5 Teilen einer 35%igen wäßrigen Lösung des zuvor angegebenen Emulgators und von 152 Teilen Wasser zufließen. Gleichzeitig läßt man getrennt eine Lösung von 2,5 Teilen Kaliumpersulfat in 100 Teilen Wasser zulaufen. Nach Zulaufende hält man die erhaltene Dispersion noch 2 1/2 Stunden auf 85°C.

Nach dem Abkühlen gibt man 200 Teile einer 17,5%igen wäßrigen Lösung eines Gemisches von 25% Bernsteinsäuredihydrazid, 50% Glutarsäuredihydrazid und 25% Adipinsäuredihydrazid zu. Der pH-Wert wird nun mit Ammoniak auf 4 bis 5 gestellt. Anschließend fügt man 0,06 Teile Kupfersulfat zu.

Die auf diese Weise erhaltene Dispersion kann praktisch unbegrenzt bei Raumtemperatur gelagert werden, ohne daß darin störende Mengen Hydrazin auftreten. Sie eignet sich beispielsweise zum Beschichten von Leder, wobei gegebenenfalls die hierfür üblichen Pigmente in an sich üblichen Mengen zugesetzt werden können. Ein aus der Dispersion hergestellter Film, der bei Raumtemperatur getrocknet ist, nimmt bei 1-tägiger Lagerung in Dimethylformamid 210% seines Gewichts an diesem Lösungsmittel auf. Wird der pH-Wert der Dispersion vor der Herstellung des Films mit Ammniak auf 8 bis 9 gestellt, so ergibt sich ein Film, der nach dem Trocknen bei Raumtemperatur und der Lagerung in Dimethylformamid nur 110% seines Gewichts an diesem Lösungsmittel aufnimmt.

### Beispiel 2

Man arbeitet wie in Beispiel 1 angegeben, polymerisiert aber ein voremulgiertes Gemisch von 275 Teilen n-Butylacrylat, 165 Teilen Methylmethacrylate, 10 Teilen Acrylsäure und 50 Teilen $\beta$-Hydroxypropylacrylatacetylacetat und stellt den pH-Wert der Dispersion nach der

Emulsionspolymerisation mit Ammoniak auf 4 bis 5. Zu der Dispersion fügt man 100 Teile der 17,5%igen wäßrigen Lösung des in Beispiel 1angegebenen Dicarbonsäuredihydrazid-Gemisches und 0,02 Teile Eisen-II-sulfat. Die Dispersion weist auch nach wochenlanger Lagerung bei Raumtemperatur kein freies Hydrazin auf. Sie eignet sich zum Verfestigen von Faservliesen. Ein aus der Dispersion hergestellter Film nimmt nach 1-tägiger Lagerung in Dimethylformamid 370% Lösungsmittel auf. Läßt man die Dispersion beim pH von 8 bis 9 verfilmen, so beträgt die Dimethylformamid-Aufnahme 340%.

Beispiel 3

Man arbeitet wie in Beispiel 1 angegeben, polymerisiert aber ein voremulgiertes Gemisch von 385 Teilen 2-Äthylhexylacrylat, 85 Teilen Acrylnitril, 15 Teilen Acrylsäure und 15 Teilen Vinylmethylketon. Zu der erhaltenen Dispersion gibt man 150 Teile einer 10%igen wäßrigen Lösung von Isophthalsäuredihydrazid und 0,1 Teile Kupfersulfat. Der pH-Wert des Gemisches wird mit Ammoniak auf 4 bis 5 gestellt. Die Dispersion zeigt auch nach wochenlanger Lagerung bei Raumtemperatur keinen nennenswerten Gehalt an freiem Hydrazin. Sie kann für die Herstellung von Dispersionsklebern verwendet werden. Daraus hergestellte Filme nehmen nach dem Trocknen bei Raumtemperatur und Lagerung in Methylformamid 180% dieses Lösungsmittels auf.

Beispiel 4

Wie in Beispiel 1 angegeben, wird eine Dispersion hergestellt, bei der man von einem voremulgierten Gemisch von 250 Teilen Isobutylacrylat, 160 Teilen Vinylacetat, 15 Teilen Acrylsäure und 75 Teilen Butandiol-1-acrylat-4-acetylacetat (Wassermenge und Emulgator wie in Beispiel 1) ausgeht. Der Dispersion werden nach dem Abkühlen 150 Teile einer 17,5%igen wäßrigen Lösung des in Beispiel 1 angegebenen Dicarbonsäuredihydrazid-Gemisches und 0,08 Teile Mangan-II-sulfat zugesetzt. Der pH-Wert der Dispersion wird auf 4 bis 5 gestellt. Die Dispersion kann bei Raumtemperatur wochenlang gelagert werden, ohne daß dabei freies Hydrazin austritt. Sie kann als Bindemittel für den Pigmentdruck in der Textilindustrie verwendet werden un ergibt Filme, die nach dem Trocknen bei Raumtemperatur und 1-tägiger Lagerung in Dimethylformamid 670% ihres Gewichtes an diesem Lösungsmittel aufnehmen.

Beispiel 5

Man arbeitet für die Herstellung der Dispersion wie in Beispiel 1 angegeben, verwendet aber ein voremulgiertes Gemisch von 460 Teilen Äthylacrylat, 25 Teilen Acrylsäure und 15 Teilen Acrolein (Wassermenge und Emulgator wie in Beispiel 1). Der pH-Wert der Dispersion wird auf 4 bis 5 gestellt und 40 Teileeiner 15%igen wäßrigen Lösung von Äthylendiaminotetraessigsäuretetrahydrazid und 0.06 Teilen Kupfersulfat zugesetzt. Das Gemisch kann für die Zurichtung von Leder verwendet werden. Daraus hergestellte Filme zeigen nach dem Trocknen bei Raumtemperatur und Lagern in Dimethylformamid eine Dimethylformamidaufnahme von 260% ihres Gewichtes. Wird der pH-Wert des Gemisches vor Herstellung der Filme auf 9 bis 10 gestellt, so beträgt die Dimethylformamidaufnahme daraus hergestellter und bei Raumtemperatur getrockneter Filme nur 180% ihres Gewichts.

Beispiel 6

Man arbeitet wie in Beispiel 1 angegeben, setzt jedoch eine in gleicher Weise voremulgierte Monomerenmischung aus 325 Teilen Äthylacrylat, 135 Teilen Methylmethacrylat, 15 Teilen methacrylsäure und 25 Teilen Vinylmethylketon ein. Zu der erhaltenen Dispersion fügt man 80 Teile einer 17,5%igen wäßrigen Lösung von Adipinsäuredihydrazid und 0,04 Teile Kupfersulfat. In der Dispersion tritt auch nach wochenlanger Lagerung bei Raumtemperatur kein freies Hydrazinauf. Daraus hergestellte Filme nehmen nach dem Trocknen bei Raumtemperatur 315% ihres Gewichts in Dimethylformamid auf. Die Dispersion eignet sich für Verfestigung von Faservliesen.

Beispiel 7

In einem mit Rührer, Thermometer und Zulaufgefäßen ausgestatteten Reaktionsgefäß legt man ein Gemisch von 5,7 Teilen einer 35%igen wäßrigen Lösung des Natriumsalzes des in üblicher Weise sulfatierten Umsetzungsproduktes von p-Isooctylphenol mit 25 Mol Äthylenoxid, 2 Teile Kaliumpersulfat und 200 Teile Wasser vor. Hierzu läßt man aus getrennten Zulaufgefäßen innerhalb von 2 1/2 Stunden (a) ein in 143 Teilen Wasser emulgiertes Gemisch aus 400 Teilen Äthylacrylat, 8 Teilen Acrylsäure und 40 Teilen Dimethylpentenal (Emulgator 17,1 Teile des sulfatierten Isooctylphenol-äthylenoxid-Adduktes) und (b) eine Lösung von 2 Teilen Kaliumpersulfat in 80 Teilen Wasser gleichzeitig bei 85°C zulaufen. Nach Zulaufende hält man die Temperatur des Reaktionsgemisches noch 2 1/2 Stunden bei 85°C und stellt den pH-Wert nach dem Abkühlen auf 4 bis 5. Dann fügt man 160 Teile einer 17,5%igen wäßrigen Lösung des in Beispiel 1 angegebenen Dicarbonsäuredihydrazid-Gemisches und 0,06 Teile Kupfer-II-sulfat zu. Die erhaltene Dispersion ist bei Raumtemperatur wochenlang lagerfähig, ohne daß dabei freies Hydrazin auftritt. Sie kann für die Zurichtung von Leder verwendet werden. Daraus hergestellte Filme nehmen bei der Lagerung in Dimethylformamid bei Raumtemperatur 730% ihres Gewichts an diesem Lösungsmittel auf.

Beispiel 8

Man arbeitet wie in Beispiel 1 angegeben, verwendet jedoch ein voremulgiertes Monomerengemisch aus 150 Teilen Styrol, 312,5 Teilen n-Butylacrylat und 37,5 Teilen Dimethylacrolein. Nach dem Abkühlen werden der Dispersion 80 Teile einer 17,5%igen wäßrigen Lösung der Bernsteinsäuredihydrazids und 0,05 Teile Kobaltsulfat zugegeben. Die Dispersion enthält auch nach wochenlanger Lagerung bei Raumtemperatur kein freies Hydrazin. Sie kann für das Streichen von Papier verwendet werden. Daraus hergestellte Filme zeigen nach dem Trocknen bei Raumtemperatur eine Dimethylformamidaufnahme von 260% ihres Gewichts.

Beispiel 9

Man arbeitet wie in Beispiel 1 angegeben, geht aber von einem voremulgierten Monorengemisch von 300 Teilen 2-Äthylhexylacrylat, 150 Teilen Styrol und 50 Teilen Diacetonacrylamid aus. Der pH-Wert der Dispersion wird nach dem Abkühlen auf 4 bis 5 gestellt, 80 Teile einer 17,5%igen wäßrigen Lösung von Glutarsäuredihydrazid und 0,06 Teile Kupfersulfat zugesetzt. Die erhaltene Dispersion zeigt auch nach wochenlangem Lagern bei Raumtemperatur kein freies Hydrazin. Sie kann für die Verfestigung von Spinnvliesen verwendet werden. Daraus hergestellte Filme zeigen nach dem Trocknen bei Raumtemperatur und im Lagern in Dimethylformamid eine Aufnahme an diesem Lösungsmittel von 110% ihres Gewichtes.

Beispiel 10

In einem mit Rührwerk, Thermometer und Zulaufgefäßen versehenen Reaktionsgefäß legt man ein Gemisch aus 170 Teilen Wasser, 5,7 Teilen einer 35%igen wäßrigen Lösung des Natriumsalzes des sulfatierten Umsetzungsproduktes von p-Isooctylphenol mit 25 Mol Äthylenoxid und 2 Teile Kaliumpersulfat vor. In die auf 85°C erwärmte Vorlage gibt man aus getrennten Gefäßen gleichzeitig innerhalb von 2 1/2 Stunden (a) ein Gemisch von 240 Teilen Methylacrylat, 112 Teilen Styrol, 8 Teilen Methacrylsäure und 40 Teilen Zimtaldehyd, das in 17,2 Teilen der 35%igen Emulgatorlösung emulgiert ist und (b) eine Lösung von 2 Teilen Kaliumpersulfat in 80 Teilen Wasser. Nach Zulauffende läßt man noch 2 1/2 Stunden bei 90°C nachreagieren. Man kühlt dann ab, stellt den pH-Wert auf 4 bis 5 und fügt 140 Teile einer 17,5%igen wäßrigen Lösung von Glutarsäuredihydrazid und 0,04 Teile Kupfersulfat zu. Die erhaltene Dispersion its wochenlang bei Raumtemperatur lagerbar, ohne daß dabei freies Hydrazin auftritt. Sie kann als Rohstoff für Haftkleber verwendet werden. Daraus hergestellte Filme zeigen nach dem Trocknen bei Raumtemperatur und Lagerung in Dimethylformamid eine Aufnahme an diesem Lösungsmittel von 900% ihres Gewichts.

Beispiel 11

Man arbeitet wie in Beispiel 1 angegeben, legt aber 153,6 Teile Wasser und 7,14 Teile der in Beispiel 1 genannten 35%igen Emulgatorlösung vor. 390 Teile Vinylpropionat, 75 Teile t-Butylacrylat und 7 Teile 3-Acrylamidomethylanisaldehyd werden mit 5 Teilen Umsetzungsproduktes von p-n-Octylphenol mit 20 Mol Alkylenoxid und 64,3 Teilen einer 35%igen wäßrigen Lösung des Natriumsalzes eines sulfatierten Umsetzungsproduktes von Isooctylphenol mit 25 Mol Äthylenoxid in 200 Teilen Wasser emulgiert. Als Initiatorlösung verwendet man 2,5 Teile Kaliumpersulfat in 100 Teilen Wasser. Der pH-Wert wir mit Ammoniak auf 6 eingestellt. Zu der Dispersion fügt man eine wäßrige Aufschlämmung von 22,8 Teilen Hexamethylenbis-semicarbazid und 0,075 Teilen Vanadiumnitrat ($V(NO_3)_3$). Die Dispersion weist auch nach wochenlanger Lagerung kein freies Hydrazin auf. Ein aus der Dispersion hergestellter Film nimmt nach 1-tägiger Lagerung in Dimethylformamid 280% Lösungsmittel auf.

Beispiel 12

In einem mit Rührwerk, Thermometer und Zulaufgefäßen ausgestatteten Autoklaven werden 2 219 Teile Wasser, 10% der Monomerenemulsion und 10% der Initiatorlösung vorgelegt. Die Monomerenemulsion enthält 3 750 Teile Butadien, 5 250 Teile Styrol, 2 500 Teile n-Butylacrylat und 1 000 Teile Acrylamidopivalinaldehyd, emulgiert mit 469 Teilen einer 40%igen wäßrigen Lösung von Laurylsulfat. Die Initiatorlösung enthält 125 Teile Kaliumpersulfat in 5 000 Teilen Wasser. Die Vorlage wird auf 80°C aufgeheizt. Im Verlauf von 4 Stunden werden die Zuläufe in den Reaktor kontinuierlich eingetragen, anschließend wir die Reaktionsmischung noch 3 Stunden nachpolymerisiert, dann wird abgekühlt, entspannt und die Dispersion abgelassen. Der pH-Wert wird mit Ammoniak auf 8 gestellt. In der Dispersion werden 313 Teile Kohlensäurebishydroxid und 5,3 Teile Zinksulfat eingerührt. In der Dispersion kann auch nach wochenlanger Lagerung bei Raumtemperatur kein freies Hydrazin nachgewiesen werden. Die Dispersion ist geeignet zur Verfestigung von Vliesstoffen. Ein aus ihr hergestellter Film nimmt nach 1-tägiger Lagerung in Dimethylformamid 350% Lösungsmittel auf.

Beispiel 13

Man arbeitet wie in Beispiel 12. Emulgiert werden 7 500 Teile Vinylchlorid, 3 125 Teile Iso-Butylacrylat und 1 875 Teile Formylstyrol mit 625 Teilen einer 40%igen wäßrigen Laurylsulfatlösung in 5 000 Teilen Wasser. Nach Beendigung der Polymerisation wird der pH-Wert mit Ammoniak auf 7 gestellt. Ferner werden 1 659 Teile Oxalsäuredihydrazid und 45,3 Teile Zinksulfat eingerührt. Auch nach wochenlanger Lagerung bei Raumtemperatur kann kein freies Hydrazin nachgewiesen

werden. Ein aus der Dispersion hergestellter Film nimmt nach 1-tägiger Lagerung in Dimethylformamid 180% Lösungsmittel auf.

Beispiel 14

Man arbeitet wie in Beispiel 12 angegeben. Emulgiert werden 10 500 Teile Vinylidenchlorid, 625 Teile Methylacrylat, 125 Teile Acrylsäure und 1 250 Teile Acetonylacrylat mit 625 Teilen einer 40%igen wäßrigen Laurylsulfatlösung in 5 000 Teilen Wasser. Nach Beendigung der Polymerisation wird der pH-Wert mit Ammoniak auf 7 gestellt. Anschließend werden 47 Teile Toluylen-bis-semicarbazid und 0,28 Teile Chromsulfat eingerührt. Die Dispersion ist geeignet zur Beschichtung von Papier. Auch nach wochenlanger Lagerung bei Raumtemperatur kann kein freies Hydrazin nachgewiesen werden. Ein aus der Dispersion hergestellter Film nimmt nach 1-tätiger Lagerung in Dimethylformamid 540% Lösungsmittel auf.

Beispiel 15

In einem Autoklaven mit Rührer und Temperaturregelung werden 1 000 Teile Vinylacetat, 400 Teile Polyvinylalkohol (88%ig verseift, Viskosität der 40%igen Lösung 25 mPa.s), 200 Teile eines mit 20 Mol Äthylenoxid äthoxylierten Nonylphenols, 20 Teile Natriumacetat und 6 500 Teile Wasser vorgelegt. Dann wird auf 55°C aufgeheizt. Äthylen wird bis zu einem Druck von 40 bar aufgepreßt. Dieser Druck wird anschließend während der Polymerisation aufrechterhalten. Die Polymerisation wird gestartet mit einer Lösung von 40 Teilen kaliumpersulfat und 2 000 Teilen Wasser und 40 Teilen Natriumhydrogensulfit in 2 000 Teilen Wasser. Beide Zuläufe werden getrennt im Verlauf von 4 Stunden zugefahren. Außerdem wird ein Mischung aus 7 000 Teilen Vinylacetat und 500 Teilen Acryloxypivalinaldehyd kontinuierlich im Verlauf von 3 Stunden in den Autoklaven eingebracht. Anschließend wird 1 Stunden bei 55°C nachpolymerisiert. Der Reaktor wird gekühlt, entspannt und die Dispersion abgelassen. Die Analyse ergibt einen Äthylengehalt von 15%. In die Dispersion werden 250 Teile Bis-semicarbazid der Formel

$$H_2N{-}NH{-}\underset{\underset{O}{\|}}{C}{-}NH{-}NH{-}C{-}NH{-}NH_2$$

und 2,75 Teile Chromsulfat eingerührt. Die Dispersion ist für die Oberflächenbeschichtung von Leder geeignet. Auch nach wochenlanger Lagerung kann kein freies Hydrazin nachgewiesen werden. Ein aus der Dispersion hergestellter Film nimmt nach 1-tägiger Lagerung in Dimethylformamid 620% Lösungsmittel auf.

**Patentansprüche**

1. Wäßrige Dispersionen von Carbonylgruppen aufweisenden Copolymerisaten, die je Mol Carbonylgruppe 0,02 bis 1 Mol organische Hydrazinderivate mit mindestens 2 Hydrazinresten enthalten, gekennzeichnet durch einen Gehalt an 0,0002 bis 0,02 Mol, bezogen auf 1 Mol der Hydrazinderivate, an Ionen des Kupfers, Zinks, Eisens, Chroms, Mangans, Bleis, Vanadiums, Kobalts und/oder Nickels, die als wasserlösliche Salze zugesetzt werden.

2. Wäßrige Dispersionen gemäß Anspruch 1, dadurch gekennzeichnet, daß sie als Hydrazinderivate 2 bis 10 C-Atome enthaltende aliphatische Dicarbonsäuredihydrazide enthalten.

3. Wäßrige Dispersionen gemäß Anspruch 1, dadurch gekennzeichnet, daß sie als Hydrazinderivate Bis-semicarbazide enthalten.

4. Wäßrige Dispersionen gemäß Anspruch 1, dadurch gekennzeichnet, daß sie die Schwermetallionen in Form wasserlöslicher Salze des Kupfers, Eisens, Mangans, Vanadiums und/oder Cobalts enthalten.

**Revendications**

1. Dispersions aqueuses de copolymères à groupes carbonyle, contenant par mole de groupes carbonyle 0,02 à 1 mole de dérivés organiques de l'hydrazine comportant au moins deux groupes hydrazine, caractérisées en ce qu'elles contiennent par mole de dérivés d'hydrazine entre 0,0002 et 0,02 mole d'ions cuivre, zinc, fer, chrome, manganèse, plomb, vanadium, cobalt et(ou) nickel, ajoutés sous forme de sels solubles dans l'eau.

2. Dispersions aqueuses suivant la revendication 1, caractérisées en ce que les dérivés de l'hydrazine, qu'elles contiennent, sont des dihydrazides d'acides dicarboxyliques aliphatiques en $C_2$ à $C_{10}$.

3. Dispersions aqueuses suivant la revendication 1, caractérisées en ce que les dérivés de l'hydrazine, qu'elles contiennent, sont des bis-semicarbazides.

4. Dispersions aqueuses suivant la revendication 1, caractérisées en ce qu'elles contiennent les ions de métaux lourds sous forme de sels solubles dans l'eau du cuivre, du fer, du manganèse, du vanadium et(ou) du cobalt.

**Claims**

1. Aqueous dispersions of carbonyl-containing copolymers, which dispersions contain from 0.02 to 1 mole of organic hydrazine derivatives, possessing at least 2 hydrazine radicals, per mole of carbonyl group, characterized by a content of from 0.0002 to 0.02 mole, based on 1 mole of hydrazine derivative, of copper, zinc, iron, chromium, manganese, lead, vanadium, cobalt and/or nickel ions which are added in the form of water-soluble salts.

2. Aqueous dispersions as claimed in claim 1,

characterized in that they contain as hydrazine derivatives dihydrazides of aliphatic dicarboxylic acids of 2 to 10 carbon atoms.

3. Aqueous dispersions as claimed in claim 1, characterized in that they contain as hydrazine derivatives bis-semicarbazides.

4. Aqueous dispersions as claimed in claim 1, characterized in that they contain the heavy metal ions in the form of water-soluble copper, iron, manganese, vanadium and/or cobalt salts.